Europäisches Patentamt

European Patent Office

Office européen des brevets

(11) Publication number: **0 451 886 A1**

## EUROPEAN PATENT APPLICATION

(21) Application number: **91200509.7**

(22) Date of filing: **08.03.91**

(51) Int. Cl.⁵: **H02K 3/16**

(30) Priority: **16.03.90 IT 660790**
**16.01.91 IT 2891 U**

(43) Date of publication of application:
**16.10.91 Bulletin 91/42**

(84) Designated Contracting States:
**AT BE CH DE DK ES FR GB GR IT LI LU NL SE**

(71) Applicant: **D.L. INVENTION s.n.c.**
**Via Taranto 82-A**
**I-95027 San Giovanni la Punta Catania(IT)**

(72) Inventor: **Leto, Andrea**
**Via Recupero 1**
**I-95021 Acicastello-Catania(IT)**

(74) Representative: **Henke, Erwin et al**
**Ing.Barzanò & Zanardo Milano S.p.A. Via**
**Borgonuovo, 10**
**I-20121 Milano(IT)**

(54) Sensitiser for differential safety switches in electric plants for supplying consumers.

(57) In an electric plant for supplying electric current to a plurality of consumers, a sensitiser for differential safety switches comprises a hollow metal body provided with a container element of insulating material, wherein the container element and the hollow metal body are connected at one side to a water supply connection and at the other side to a cable of electrically conductive material. The cable is itself in communication with environments in the presence of water or a high degree of humidity, and the container element is permanently filled with water circulating in the supply system.

Fig.1

This invention relates to a sensitiser for differential safety switches in electric plants for supplying consumers.

The risk of electrocution in a domestic environment is well known, e.g. as a result of small electrical appliances being dropped into a bath filled with water, or in the case of an industrial environment, where the flooring in the vicinity of electrical machinery may be humid or wet, with consequent risk for the operators. There are no devices at present capable of guaranteeing adequate safety in the event of accidental absorption of current in the presence of water or humidity. The object of this invention is to obviate the disadvantages of the prior art, producing a sensitiser for differential safety switches which presents no problems with respect to maintenance.

This problem is solved, in the case of an electric plant for supplying electric current to a plurality of consumers, by a sensitiser for differential safety switches, characterised in that it comprises a hollow metal body provided with a container element of insulating material, the said container element and the said hollow metal body being connected at one side to a water supply connection and at the other side to a cable of electrically conductive material, the said cable itself being in communication with environments in the presence of water or a high degree of humidity, the said container element being permanently filled with water circulating in the said supply system.

In particular, the hollow metal body and the container element each have a hollow cylindrical shape, the latter, moreover, according to this invention, preferably being provided with a passing contact separated from the hollow metal body and in contact at one side with the conductive cable and at the other side with the interior of the container element. The passing contact is moreover provided with a terminal strip at the exterior of the container element.

According to the invention, the connection may be a tee-joint.

The environments in the presence of water or a high degree of humidity may be tanks containing water or humid or constantly wet flooring.

Finally, according to this invention, the electric plants for supplying current to a plurality of consumers are also necessarily provided with at least one differential switch.

The features and other advantages of this invention will be clearer from the following description, given by way of a non-limiting example, with reference to the accompanying drawings, in which:

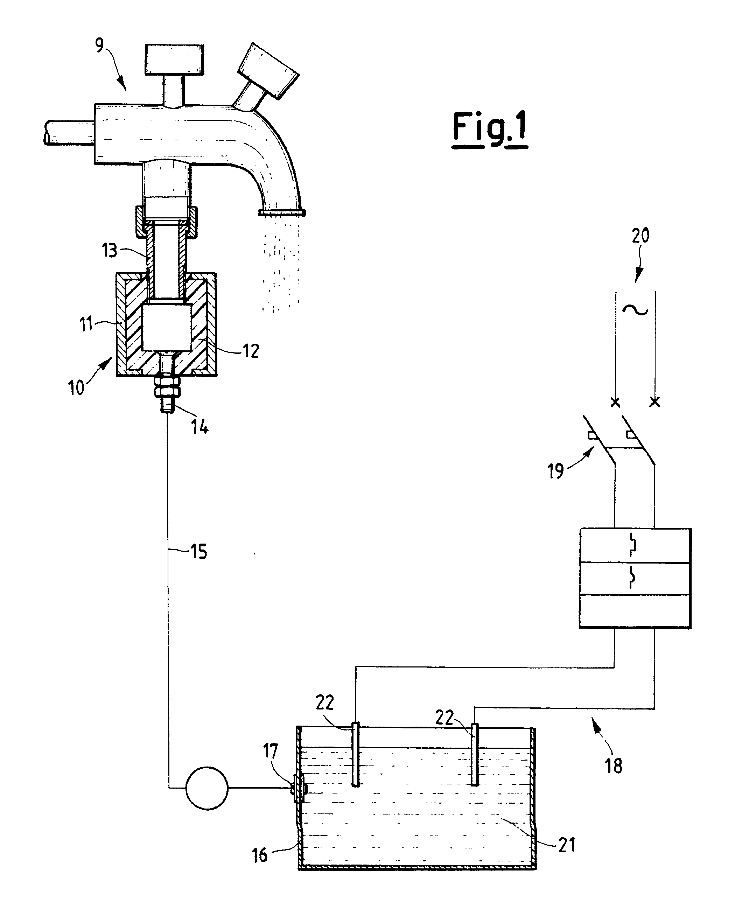

Fig. 1    shows a section of a sensitiser according to the invention, installed in a plant illustrated in diagrammatic form, and

Fig. 2    is another embodiment of a plant equipped with a sensitiser according to the invention.

Referring to the drawings, a sensitiser for differential switches according to this invention is designated in general by the reference numeral 10, said sensitiser comprising a metal body 11 provided with a container element 12 of insulating material.

In particular, according to an embodiment described in the drawings, both the metal body 11 and the container element 12 have a hollow cylindrical shape, although it is also possible to use any other shape provided that there is substantially no change to the configuration and arrangement of these elements.

The sensitiser 10 is connected to a water supply, designated in general by the reference numeral 9, by means of a connection 13. In this embodiment, the water supply consists of a normal supply system, but it could also be a domestic heating supply system.

A terminal strip 14 passing through the container element 12 and in contact with the interior thereof is provided at another end of the sensitiser 10.

One or more conductive metal cables 15 depart from the terminal strip 14, these being In communication with environments in the presence of water or a high degree of humidity.

In one embodiment according to this invention, one of these environments consists of a tank 16, the conductive cable 15 being connected by means of a metal connection 17.

The reference numeral 18 designates a local electric current distribution line, illustrated in diagrammatic form, leading to a differential switch 19 for connection to a general distribution line designated by the reference numeral 20.

Inside the tank 16, the water is designated by the reference numeral 21 and a pair of electrodes by the reference numeral 22.

The electrodes 22 indicate a device or a machine which, in the event of accidental dropping into the tank 16, is capable of dispersing a considerable amount of current.

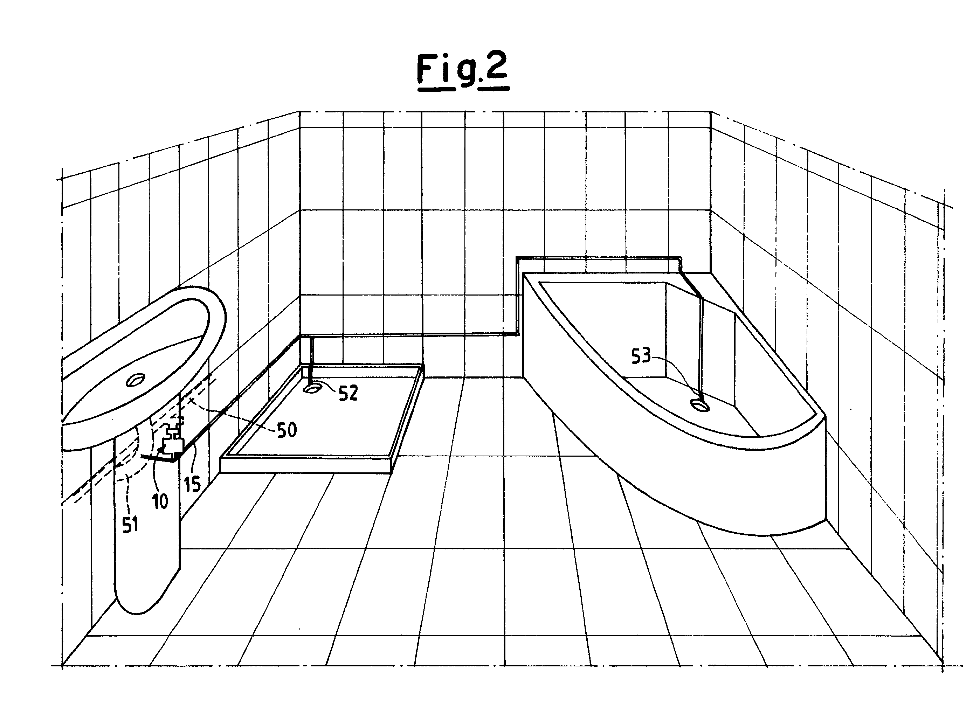

It is moreover known that in order to achieve efficient operation of the sensitiser 10, it must be filled with water from the supply system to which it is connected. Fig. 2 shows another configuration of a plant in which the sensitiser 10 is connected to a water supply system 50, while the conductors 15 are connected to a wash-basin outlet 51, a shower stall 52 and a bath tub 53. Irrespective of the configuration in which the sensitisers are used, the intervention times of the differential switches are reduced considerably, thereby allowing for virtually immediate current dispersion and at the same time preventing the risk of electrocution by the accidental dropping of machines or devices in both domestic and industrial environments in the presence of water or a high degree of humidity.

## Claims

1. Electric plant for supplying electric current to a plurality of consumers provided with a sensitiser for differential safety switches, characterised in that it comprises a hollow metal body provided with a container element of insulating material, the said container element and the said hollow metal body being connected at one side to a water supply connection and at the other side to a cable of electrically conductive material, the said cable itself being in communication with environments in the presence of water or a high degree of humidity, the said container element being permanently filled with water circulating in the said supply system.

2. Sensitiser according to claim 1, characterised in that the said hollow metal body and the said container element each have a hollow cylindrical shape.

3. Sensitiser according to claim 1, characterised in that the said container element of insulating material is provided with a passing contact separated from the said hollow metal body and in contact at one side with the said conductive cable and at the other side with the interior of the said container element.

4. Sensitiser according to claim 3, characterised in that the said passing contact is provided with a terminal strip at the exterior of the said container element.

5. Sensitiser according to claim 1, characterized in that the said connection is a tee-joint.

6. Sensitiser according to claim 1, characterized in that the said environments in the presence of water are tanks containing water.

7. Sensitiser according to claim 1, characterised in that the said environments in the presence of water or a high degree of humidity consist of humid or constantly wet flooring.

8. Sensitiser according to claim 1, characterised in that the said electric plants for supplying current to a plurality of consumers are necessarily provided with at least one differential switch.

Fig.1

# Fig.2

EP 0 451 886 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-6 268 18 (A.F. KOPPEL) <br> * the complete document * | 1,2,7 | H 02 H 3/16 |
| A | DE-B-2 613 376 (SIEMENS AG) <br> * column 1, line 44 - column 2, line 59; figur 1 * | 1 | |
| A | ELEKTROTECHNIK UND MASCHINENBAU (E & M) vol. 103, no. 2, 1985, pages 50-59; G. BIEGELMEIER et al.: "Körperströme und Berührungsspannungen in der Badewanne" <br> * pages 50-59 * | 1 | |
| A | K. VOLGER et al.: "HAUSTECHNIK - GRUNDLAGEN - PLANUNG - AUSFUEHRUNG 7th edition, pages 324,325, 1985, B.G. Teubner, Stuttgart, DE <br> * pages 324,325 * | 1 | |

TECHNICAL FIELDS
SEARCHED (Int. Cl.5)

H 02 H 3/16

The present search report has been drawn up for all claims

| Place of search | Date of completion of search | Examiner |
|---|---|---|
| Berlin | 18 June 91 | LEMMERICH J |